# EUROPÄISCHE PATENTSCHRIFT

(11) **EP 1 370 448 B1**
(45) Veröffentlichungstag und Bekanntmachung des Hinweises auf die Patenterteilung: **02.03.2005**
(21) Anmeldenummer: 02726150.2
(22) Anmeldetag: 08.03.2002
(51) Int. Cl.: B60R 22/34

(54) **GURTBANDBEFESTIGUNG AN EINER GURTAUFROLLERWELLE**
BELT STRAP FIXING DEVICE ON A BELT RETRACTOR SHAFT
SYSTEME DE FIXATION DE CEINTURE SUR UN AXE D'ENROULEUR DE CEINTURE

(30) Priorität: 20.03.2001 DE 10113342
(43) Veröffentlichungstag der Anmeldung: 17.12.2003
(73) Patentinhaber: AUTOLIV DEVELOPMENT AB, 447 83 Vargarda (SE)
(72) Erfinder: LAUN, Ulrich, 21423 Drage (DE)
(74) Vertreter: Müller, Karl-Ernst, Dr., Dipl.-Ing.
(86) Internationale Anmeldenummer: PCT/EP2002/002544
(87) Internationale Veröffentlichungsnummer: WO 2002/074590

(56) Entgegenhaltungen:
- EP-A- 0 252 834
- US-A- 4 967 976
- US-A- 5 722 611

## Beschreibung

Die Erfindung betrifft einen Sicherheitsgurtaufroller, insbesondere für Kraftfahrzeuge, mit einer in einem Gehäuse drehbar gelagerten Gurtwelle und einem daran befestigten Gurtbandendabschnitt, wobei zur ohne Gurtbandvernähung ausgestalteten Festlegung des Gurtbandendes an der Gurtwelle die Gurtwelle eine Ausnehmung zur Aufnahme eines darin eingelegten Gurtstiftes aufweist und das Gurtbandende in einem in dem Gurtstift ausgebildeten Schlitz eingehängt und mit wenigstens einer vollständigen Umschlingung um den Gurtstift herum und anschließend durch einen den Wellenkörper der Gurtwelle exzentrisch zum Mittelpunkt der Gurtwelle durchsetzenden, von der Ausnehmung ausgehenden Wellenschlitz aus der Gurtwelle herausgeführt ist.

Ein Sicherheitsgurtaufroller mit einer mit den vorgenannten Merkmalen bezeichneten Befestigung des Gurtbandes an der Gurtwelle ergibt sich aus der DE AS 25 56 409. Der der Festlegung des Gurtbandendes an der Gurtwelle dienende Gurtstift ist mit der zum Inneren des Wellenkörpers weisenden offenen Seite seines Schlitzes in die in dem Wellenkörper ausgebildete Ausnehmung eingesetzt, wobei der mit seinem Ende in den Schlitz des Gurtstiftes eingefädelte Endabschnitt des Gurtbandes mit einer Umschlingung um den Gurtstift herumgeführt ist. Es ist zusätzlich eine im Tiefsten der Gurtwellenausnehmung angeordnete Gegenleiste vorgesehen, um welche der Endabschnitt des Gurtbandes in einer weiteren Umschlingung herumgeführt ist, so daß die Gegenleiste von dem sie umschlingenden Gurtband gegen den Gurtstift gedrückt wird und dabei die erste Umschlingungslage des Gurtbandes zwischen dem Gurtstift und der Gegenleiste einklemmt. An beiden Längsrändern der Gurtwellenausnehmung wie auch im Bereich von deren offener Seite ergibt sich eine doppellagige Gurtbandanordnung, bevor der Endabschnitt des Gurtbandes mit einer einfachen Lage durch den Wellenschlitz aus der Gurtwelle herausgeführt ist.

Zwar will die bekannte Gurtbandbefestigung die Belastung des Gurtbandes an dessen engen Umlenkungen um den Gurtstift im Bereich der Gurtwellenausnehmung bereits insbesondere durch die zweilagige Gurtbandanordnung vermindern, jedoch ist die dementsprechend konzipierte Gurtbandbefestigung kompliziert und erfordert mit dem Gurtstift und der gesonderten Gegenleiste mehrere Bauteile und dadurch bedingt eine umständliche Montage.

Der Erfindung liegt daher die Aufgabe zugrunde, bei einem Sicherheitsgurtaufroller mit den eingangs genannten Merkmalen die Befestigung des Gurtbandes an der Gurtwelle zu vereinfachen und eine so weitgehende Schonung des Gurtbandes zu erreichen, daß die für die Gurtbandbefestigung zu fordernde Bruchlast sichergestellt werden kann.

Zur Lösung dieser Aufgabe sieht die Erfindung vor, daß der Gurtstift in die Ausnehmung des Wellenkörpers derart eingesetzt ist, daß sein Schlitz sich zum äußeren Umfang des Wellenkörpers öffnet, und daß das eingelegte Gurtband nach der Umschlingung des Gurtstiftes unter Ausbildung einer im Bereich der Ausnehmung entstehenden Doppellage in den Wellenschlitz weitergeführt ist und daß die in den Wellenschlitz einmündende und den Gurtstift abstützende Begrenzungsfläche der Ausnehmung einen zur Längsachse des Wellenschlitzes schrägen Verlauf aufweist und der in die Ausnehmung eingesetzte Gurtstift eine zur Begrenzungsfläche parallele Abschrägung aufweist.

Die EP 0 402 489 A1 wie auch die DE 76 33 004 U1 zeigen jeweils eine vernähungsfreie Gurtbandbefestigung an der Gurtwelle eines Sicherheitsgurtaufrollers, jedoch ohne die Verwendung eines gesonderten Gurtstiftes. Stattdessen wird der in der Gurtwelle ausgebildete Wellenschlitz unmittelbar für das Einhängen des Gurtbandendes benutzt, und hierbei ist vorgesehen, das Gurtband mit einer doppellagigen Anordnung durch den Wellenschlitz zu führen. Für die Verwendung eines gesonderten Gurtstiftes sind die bekannten Befestigungen nicht brauchbar. Weiterhin zeigt die EP 0 620 141 A1 zusätzlich den Einsatz eines Gurtstiftes in dem sich hierzu in einer Ausnehmung erweiternden Wellenschlitz, jedoch wird das Gurtband lediglich außen um den Gurtstift geführt. Die Abstützung eines Gurtstiftes in einer Wellenausnehmung über korrespondierend an Gurtstift und Wellenausnehmung angeordnete Schrägflächen ist aus der WO 9919176 A1 grundsätzlich bekannt.

Mit der Erfindung ist der Vorteil verbunden, daß nur eine 1 ½ fache Umschlingung des Gurtstiftes mit dem Gurtband erforderlich ist, wodurch die Montage vereinfacht ist. Aufgrund der Anordnung der korrespondierenden Schrägflächen in der Gurtwellenausnehmung und an dem Gurtstift erzeugt eine auf das Gurtband ausgeübte Zugkraft eine Hangabtriebskraft, die in Richtung des Wellenschlitzes wirkt, und dabei den Gurtstift mit seiner Schrägfläche entlang der schrägen Begrenzungsfläche der Gurtwellenausnehmung in Richtung der parallel zur Längsachse des Wellenschlitzes verlaufenden Randfläche der Wellenausnehmung zu verschieben trachtet. Dadurch ist einerseits eine Verkantung des Gurtstiftes in der Wellenausnehmung vermieden, und andererseits wird durch die Anlage des Gurtstiftes an dem in der Längsachse des Wellenschlitzes verlaufenden doppellagigen Gurtbandtrumm eine zusätzliche Kraftkomponente erzeugt, die das doppellagige Gurtband großflächig gegen die in der Längsachse des Wellenschlitzes verlaufende Randfläche der Wellenausnehmung klemmt. Durch diese zusätzliche Klemmung wird der Umlenkbereich des Gurtbandes um den Gurtstift von einer größeren, örtlich konzentrierten Krafteinwirkung freigehalten, so daß das Gurtband insgesamt geschont ist und bei hohen Zugkräften am Gurtband nicht vorzeitig zerstört wird.

In der Zeichnung ist ein Ausführungsbeispiel der Erfindung wiedergegeben, welches nachstehend beschrieben ist. Es zeigen:
- Fig. 1: eine Gurtwelle mit dem daran zu befestigenden Gurtbandende in einer Gesamtdarstellung bei noch nicht montiertem Gurtstift,
- Fig. 2: den Gegenstand der Fig. 1 bei eingesetztem Gurtstift,
- Fig. 3: den Gegenstand der Fig. 2 in Seitenansicht.

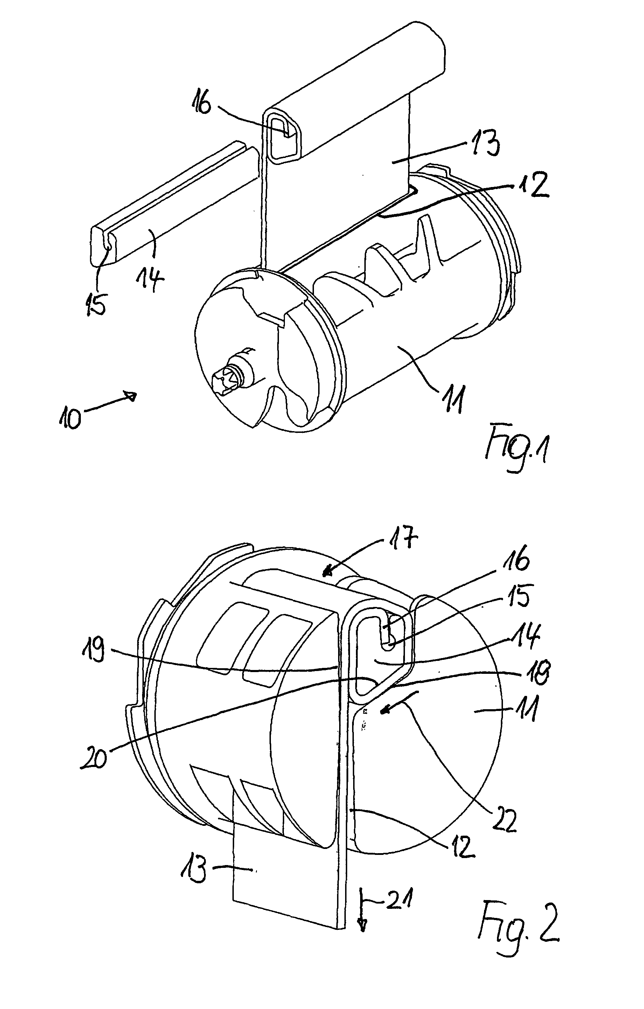

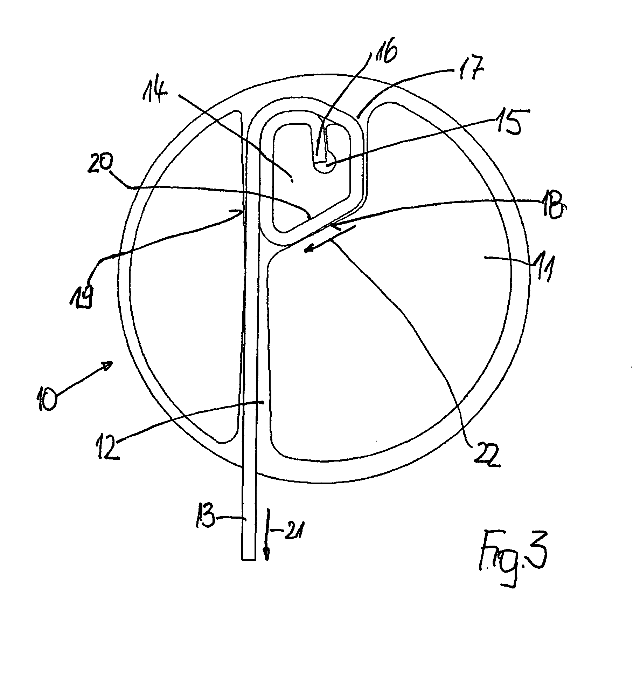

Wie sich zunächst aus Fig. 1 ergibt, weist der Wellenkörper 11 einer insgesamt dargestellten Gurtwelle 10 einen den Wellenkörper 11 quer durchsetzenden Wellenschlitz 12 auf, durch den der Endabschnitt 13 eines Gurtbandes geführt ist, wobei das Gurtbandende 16 in einem Gurtstift 14 dadurch festgelegt wird, daß das Gurtbandende 16 in einem in dem Gurtstift 14 ausgebildeten Schlitz 15 eingefädelt ist. Der Gurtstift 14 mit dem darum geschlungenen Endabschnitt 13 wird alsdann, wie sich aus den Fig. 2 und 3 im einzelnen entnehmen läßt, in eine passend ausgestaltete Ausnehmung 17 im Wellenkörper 11 eingelegt, so daß bei einem auf den Endabschnitt 13 ausgeübten Zug in Richtung des Pfeils 21 der Gurtstift 14 in das Innere des Wellenkörpers 11 bzw. der den Gurtstift 14 aufnehmenden Ausnehmung 17 gezogen wird.

Der Gurtstift 14 ist in der Ausnehmung 17 derart orientiert, daß sein Schlitz 15 mit dem offenen Ende zum äußeren Umfang des Wellenkörpers 11 weist, wobei der mit dem Gurtbandende 16 in den Schlitz 15 des Gurtstiftes 14 eingehängte Endabschnitt 13 des Gurtbandes nach Austritt aus dem Schlitz 15 mit einer vollen Umschlingung um den Gurtstift 14 geführt und dann unter Ausbildung einer im Bereich der Ausnehmung 17 entstehenden Doppellage in den Wellenschlitz 12 weitergeführt ist.

Wie sich aus den Fig. 2 und 3 im einzelnen entnehmen läßt, ist die im Tiefsten der Ausnehmung 17 angeordnete und den Gurtstift 14 abstützende Begrenzungsfläche 18 der Ausnehmung 17 mit einem zur Längsachse des Wellenschlitzes 12 schräg angeordneten Verlauf ausgebildet, wobei gleichzeitig der Gurtstift 14 in seinem an der Begrenzungsfläche 18 der Ausnehmung 17 anliegenden Bereich eine zur Begrenzungsfläche 18 parallele und dazu korrespondierende Abschrägung 20 aufweist.

Wird nun auf den Endabschnitt 13 des Gurtbandes eine in Richtung des Pfeils 21 wirkende Zugkraft ausgeübt, so wird dadurch der Gurtstift 14 in das Tiefste der Ausnehmung 17 hineingezogen. Aufgrund der schrägen Ausbildung von Begrenzungsfläche 18 bzw. Abschrägung 20 kommt es zu einer in Richtung des Pfeils 22 wirkenden Hangabtriebskraft, die den Gurtstift 14 mit seiner Abschrägung 20 entlang der schrägen Begrenzungsfläche 18 in Richtung der parallel zur Längsachse des Wellenschlitzes 12 verlaufenden Randfläche 19 der Wellenausnehmung 17 zu verschieben trachtet. Hierdurch kommt es im Bereich des in der Längsachse des Wellenschlitzes 12 verlaufenden doppellagigen Gurtbandtrumms zur Einwirkung einer zusätzlichen Kraftkomponente, die das doppellagige Gurtband großflächig gegen die Randfläche 19 klemmt, so daß durch diese Gurtbandklemmung ein Großteil der in das Gurtband eingeleiteten Zugkräfte aufgenommen und damit das Gurtband im Bereich seiner Umlenkung um den Gurtstift 14 von einer größeren Krafteinwirkung freigehalten ist und so die Gurtbandbefestigung vergleichsweise hohen Zugbelastungen Stand hält.

Ein weiterer erwünschter Effekt der erfindungsgemäßen Ausgestaltung von Wellenausnehmung 17 und Gurtstift 14, insbesondere der Ausbildung der Abschrägung 20, ist das sichere Vermeiden der Gefahr einer Rotation des Gurtstiftes 14 bei Zug am Gurtband.

## Patentansprüche

1. Sicherheitsgurtaufroller, insbesondere für Kraftfahrzeuge, mit einer in einem Gehäuse drehbar gelagerten Gurtwelle (10) und einem daran befestigten Gurtbandendabschnitt (13), wobei zur ohne Gurtbandvernähung ausgestalteten Festlegung des Gurtbandendes (16) an der Gurtwelle (10) die Gurtwelle (10) eine Ausnehmung (17) zur Aufnahme eines darin eingelegten Gurtstiftes (14) aufweist und das Gurtbandende (16) in einem in dem Gurtstift (14) ausgebildeten Schlitz (15) eingehängt und mit wenigstens einer vollständigen Umschlingung um den Gurtstift (14) herum und anschließend durch einen den Wellenkörper (11) der Gurtwelle (10) exzentrisch zum Mittelpunkt der Gurtwelle (10) durchsetzenden, von der Ausnehmung (17) ausgehenden Wellenschlitz (12) aus der Gurtwelle (10) herausgeführt ist, **dadurch gekennzeichnet, daß** der Gurtstift (14) in die Ausnehmung (17) des Wellenkörpers (11) derart eingesetzt ist, daß sein Schlitz (15) sich zum äußeren Umfang des Wellenkörpers (11) öffnet, und daß das eingelegte Gurtband (13) nach der Umschlingung des Gurtstiftes (14) unter Ausbildung einer im Bereich der Ausnehmung (17) entstehenden Doppellage in den Wellenschlitz (12) weitergeführt ist und daß die in den Wellenschlitz (12) einmündende und den Gurtstift (14) abstützende Begrenzungsfläche (18) der Ausnehmung (17) einen zur Längsachse des Wellenschlitzes (12) schrägen Verlauf aufweist und der in die Ausnehmung (17) eingesetzte Gurtstift (14) eine zur Begrenzungsfläche (18) parallele Abschrägung (20) aufweist.

## Claims

1. A safety belt retractor, particularly for motor vehicles, with a belt shaft (10) mounted rotatably in a housing and with a belt strap end portion (13) fixed thereon wherein, for the purpose of fixing the belt strap end (16) on the belt shaft (10) without belt strap stitching, the belt shaft (10) has a recess (17) to receive a belt pin (14) inserted therein and the belt strap end (16) is engaged in a slot (15) formed in the belt pin (14) and is taken out of the belt shaft (10) with at least one complete looping around the belt pin (14) and then through a shaft slot (12) which starts from the recess (17) and which extends through the shaft body (11) of the belt shaft (10) eccentrically in relation to the centre point of the belt shaft (10), **characterised in that** the belt pin (14) is so inserted in the recess (17) in the shaft body (11) that its slot (15) opens towards the outer periphery of the shaft body (11) and **in that** after looping around the belt pin (14) the inserted belt strap (13) is continued into the shaft slot (12) with the formation of a double layer in the region of the recess (17), and **in that** the boundary surface (18) of the recess (17) leading into the shaft slot (12) and supporting the belt pin (14) has an oblique configuration relative to the longitudinal axis of the shaft slot (12) and the belt pin (14) inserted into the recess (17) has a chamfer (20) parallel to the boundary surface (18).

## Revendications

1. Enrouleur de ceinture de sécurité, en particulier pour des véhicules automobiles, comportant un arbre d'enroulement (10) monté rotatif dans un boîtier, et une zone d'extrémité de ceinture (13) fixée contre celui-ci, sachant que pour la fixation, conçue sans couture de la ceinture, de l'extrémité de ceinture (16) contre l'arbre d'enroulement (10), l'arbre d'enroulement (10) comporte un évidement (17) destiné à recevoir une broche de fixation (14), insérée dans celui-ci, et l'extrémité de la ceinture (16) est accrochée dans une fente (15) ménagée dans la broche de fixation (14), puis est enroulée au moins une fois complètement autour de la broche de fixation (14) et est guidée ensuite hors de l'arbre d'enroulement (10) en passant à travers une fente de l'arbre (12) qui part de l'évidement (17), traverse le corps (11) de l'arbre d'enroulement (10) et est excentrée par rapport au centre de l'arbre d'enroulement (10), **caractérisé en ce que** la broche de fixation (14) est insérée dans l'évidement (17) du corps de l'arbre (11) de telle sorte que sa fente (15) s'ouvre vers le pourtour extérieur du corps de l'arbre (11), et **en ce que** la bande de ceinture (13) insérée est, après son enroulement autour de la broche de fixation (14) en formant une double couche dans la zone de l'évidement (17), amenée dans la fente de l'arbre (12), et **en ce que** la surface de délimitation (18) de l'évidement (17), laquelle débouche dans là fente de l'arbre (12) et forme un appui pour la broche de fixation (14), est orientée en oblique par rapport à l'axe longitudinal de la fente de l'arbre (12) et la broche de fixation (14), insérée dans l'évidement (17), comporte une rampe (20) parallèle à la surface de délimitation (18).
